(19) Europäisches Patentamt
European Patent Office
Office européen des brevets

(11) **EP 3 859 189 B1**

(12) **EUROPEAN PATENT SPECIFICATION**

(45) Date of publication and mention
of the grant of the patent:
**10.05.2023  Bulletin 2023/19**

(21) Application number: **19864707.5**

(22) Date of filing: **25.09.2019**

(51) International Patent Classification (IPC):
**F16H 25/06** (2006.01)

(52) Cooperative Patent Classification (CPC):
**F16H 25/06;** F16H 2025/066

(86) International application number:
**PCT/JP2019/037613**

(87) International publication number:
**WO 2020/067163 (02.04.2020 Gazette 2020/14)**

(54) **POWER TRANSMISSION DEVICE**

STROMÜBERTRAGUNGSVORRICHTUNG

DISPOSITIF DE TRANSMISSION D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.09.2018   JP 2018183657**

(43) Date of publication of application:
**04.08.2021   Bulletin 2021/31**

(73) Proprietor: **NTN Corporation
Osaka-shi, Osaka 550-0003 (JP)**

(72) Inventors:
• **IGI,Taisuke
Iwata-shi Shizuoka 438-8510 (JP)**
• **OOBA, Hirokazu
Iwata-shi Shizuoka 438-8510 (JP)**

(74) Representative: **Grünecker Patent- und
Rechtsanwälte
PartG mbB
Leopoldstraße 4
80802 München (DE)**

(56) References cited:
**JP-A- H02 253 037      JP-A- 2005 330 990
JP-A- 2017 180 558      JP-A- 2018 021 602
US-A- 4 567 790**

**Description**

TECHNICAL FIELD

The present invention relates to a power transmission device that transmits a rotation input to an input rotating part to an output rotating part coaxially disposed at a predetermined gear ratio.

BACKGROUND ART

For example, Patent Literature 1 discloses, as shown in FIG. 9, a speed reducer in which an input plate 110 having a ball engaging groove 111 and an output plate 120 having a ball engaging groove 121 are disposed so as to face each other in an axial direction, and a rotational torque is transmitted from the input plate 110 to the output plate 120 via balls 130 engaging with the ball engaging grooves 111 and 121.

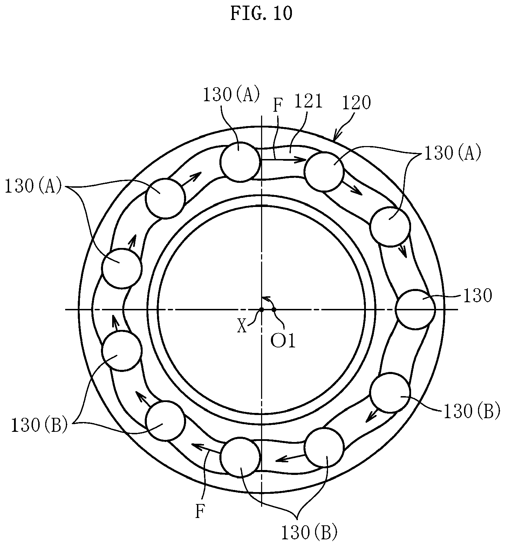

Specifically, this speed reducer includes the input plate 110 and the output plate 120 rotatably provided around a common rotation center X, a plurality of the balls 130 interposed between the input plate 110 and the output plate 120, and a cage 140 fixed to a housing 160. The first ball engaging groove 111 provided in the input plate 110 is formed in a circular shape, and the second ball engaging groove 121 provided in the output plate 120 is formed in a corrugated shape (see FIG. 10). The input plate 110 is attached to an outer circumference of an input shaft 170 via an eccentric cam 180, and thus a curvature center O1 of the circular first ball engaging groove 111 is eccentric from the rotation center X by an eccentric amount "a". In response to a rotation of the input shaft 170, the input plate 110 revolves around the rotation center X with a whirl radius "a". Along with this revolution, the balls 130 engaged with the first ball engaging groove 111 reciprocate in a radial direction in pockets 141 provided in the cage 140. A component force in a rotation direction of a contact force between the balls 130 and the second ball engaging groove 121 having a corrugated shape causes the output plate 120 to rotate.

For example, when a center line O1 of the input plate 110 revolves in a direction of an arrow from a position shown in FIG. 10 as the input shaft 170 rotates, a ball 130 (A) located above the rotation center X is pressed against an outer diameter side part of the second ball engaging groove 121 having a corrugated shape, and a ball 130 (B) located below the rotation center X is pressed against an inner diameter side part of the second ball engaging groove 121 having a corrugated shape. At this time, the output plate 120 is rotated by a component force F (see an arrow) in the rotation direction of the contact force applied from the balls 130 to the second ball engaging groove 121. As described above, in the above speed reducer, among the plurality of balls 130, not only the ball 130 (A) above the rotation center X but also the ball 130 (B) below the rotation center X contributes to torque transmission, thereby increasing a load capacity and reducing vibration.

Patent Literature 2 discloses a power transmission device according to the preamble of independent claim 1.

CITATIONS LIST

PATENT LITERATURE

Patent Literature 1: JP 2018-021602 A

Patent Literature 2: JP 2005 330990 A

SUMMARY OF INVENTION

TECHNICAL PROBLEMS

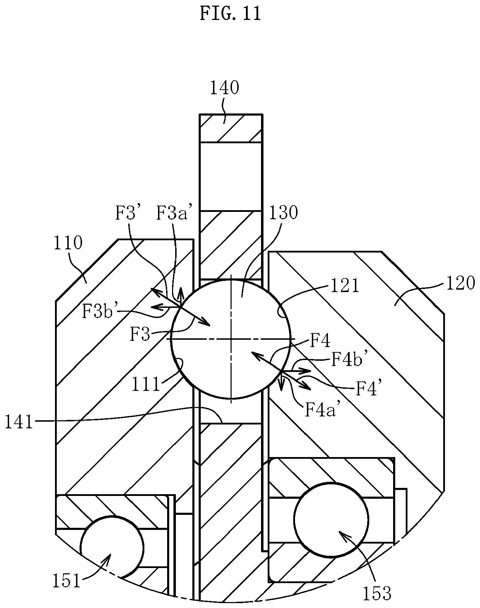

However, in the above speed reducer, as shown in FIG. 11, the balls 130 and the ball engaging grooves 111 and 121 contact each other at an inclined angle with respect to an axial direction. Thus, contact forces F3' and F4' received by the input plate 110 and the output plate 120 from the balls 130 (reaction forces of contact forces F3 and F4 applied to the balls 130) have radial direction components F3a' and F4a' and axial direction components F3b' and F4b', respectively. It is therefore necessary to use bearings 151 and 152 that support the input plate 110 and bearings 153 and 154 that support the output plate 120, which can receive loads in both radial and axial directions. As such bearings, deep groove ball bearings and angular ball bearings are generally used, but these bearings are less tolerable in the axial direction than in a radial direction. Thus, bearings that can withstand loads in both radial and axial directions are to be selected, leading to larger bearings and a larger speed reducer as a whole.

From the above circumstances, an object of the present invention to miniaturize a power transmission device as a whole that transmits a rotational torque in an axial direction via a rolling element.

SOLUTIONS TO PROBLEMS

In order to solve the above problems, the present invention provides a power transmission device according to claim 1.

As described above, in the present invention, as rolling elements transmitting torque, the rollers (for example, cylindrical rollers) having a cylindrical outer peripheral surface is used instead of balls. In this case, a load in an axial direction is hardly generated between the rollers and each member, and thus a bearing supporting an input member and an output member that receive a contact force from the rollers only has to support a radial load. In this way, because the load applied to the bearing is limited to be in the radial direction, the bearing can be miniaturized while maintaining durability, and a torque loss inside the bearing can be reduced.

However, when the rollers are used as the rolling elements transmitting torque as described above, each member contacts a plurality of locations of the outer peripheral surface of each roller in the axial direction, and contact forces in different directions are applied on the plurality of locations. Then, a moment is applied to the rollers and may collapse the rollers (the center line is inclined with respect to the axial direction). Therefore, in the present invention, the pair of third members and the pair of second members are disposed symmetrically in the axial direction around the first member, the rollers are inserted into the first pockets of the first member and the second pockets of the pair of third members, and both ends of each roller in the axial direction engage with the rolling element engaging grooves of the pair of second members. As a result, the contact forces applied to the rollers from the first pocket, the second pockets, and the rolling element engaging grooves are symmetric in the axial direction, and thus the moment applied to the rollers are cancelled out, thereby preventing the rollers from collapsing and smoothly transmitting the torque.

In the power transmission device, for example, the first member may be provided in the input rotating part, the pair of third members may be provided in the output rotating part, and the pair of second members may be used as fixed members. The second member, provided as the fixed member in this way, allows the contact force generated between the rollers and the second rolling element engaging groove to be supported by the fixed member, thereby eliminating the need for a large bearing for supporting this contact force. Further, by providing the third member in the output rotating part, only a contact force in the circumferential direction (rotational direction) is generated between the rollers and the second pockets of the output rotating part. This can reduce the load applied to the bearing supporting the third members, reduce a size of the bearing, and reduce the torque loss inside the bearing.

In this case, if the pair of third members provided in the output rotating part integrally rotatable, power transmitted from the first member provided in the input rotating part to both sides in the axial direction separately via the rollers can be combined and output. Further, by integrating the pair of third members, relative positions (phases) of the second pockets provided in each third member are fixed. Thus, the rollers can be inserted into these second pockets, thereby reliably preventing the rollers from collapsing.

The power transmission device preferably includes a friction reducing member (for example, a needle bearing or a slide bearing) provided at a contact part between an outer peripheral surface of each of the plurality of rollers and at least one of three components of the plurality of first pockets of the first member, the plurality of second pockets of the pair of third members, or the rolling element engaging groove of each of the pair of the second members. In this way, the rollers contact each component via the friction reducing member. This can significantly reduce a friction loss of each contact part as compared with a case where the rollers directly contact each member, thereby further improving torque transmission efficiency.

ADVANTAGEOUS EFFECTS OF INVENTION

Further, by using the rollers as the rolling elements transmitting the rotational torque in the axial direction, the bearing supporting the input rotating part and the output rotating part is miniaturized to miniaturize the speed reducer as a whole, and reduce the torque loss inside the bearing to improve the torque transmission efficiency. Further, by arranging the pair of second members and the pair of third members symmetrically in the axial direction on both sides of the first member in the axial direction, it is possible to prevent the rollers from collapsing and efficiently transmit the torque.

BRIEF DESCRIPTION OF DRAWINGS

FIG. 1 is a sectional view of a speed reducer according to one embodiment of the present invention.

FIG. 2 is a front view of an input member (first member).

FIG. 3 is a front view of a fixed member (second member).

FIG. 4 is a front view of an output member (third member).

FIG. 5 is an enlarged view of a V part in FIG. 4.

FIG. 6 is an exploded perspective view schematically showing the input member, the output member, the fixed member, and a roller.

FIG. 7 is a front view showing a contact force applied to the roller.

FIG. 8 is an enlarged view of the speed reducer in FIG. 1.

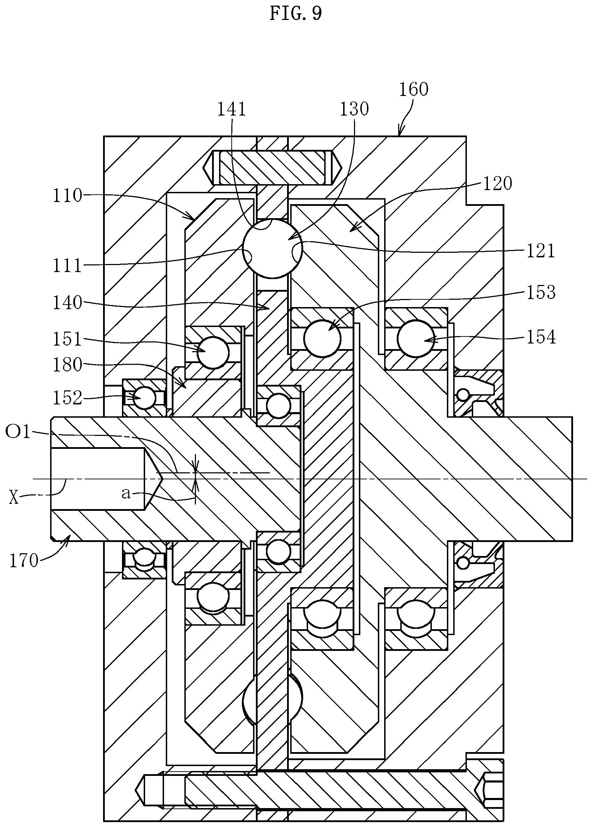

FIG. 9 is a sectional view of a conventional speed reducer.

FIG. 10 is a front view of an output plate and a ball of the speed reducer in FIG. 9.

FIG. 11 is an enlarged view of the speed reducer in FIG. 9.

## DESCRIPTION OF EMBODIMENTS

Hereinafter, an embodiment of the present invention will be described with reference to the drawings.

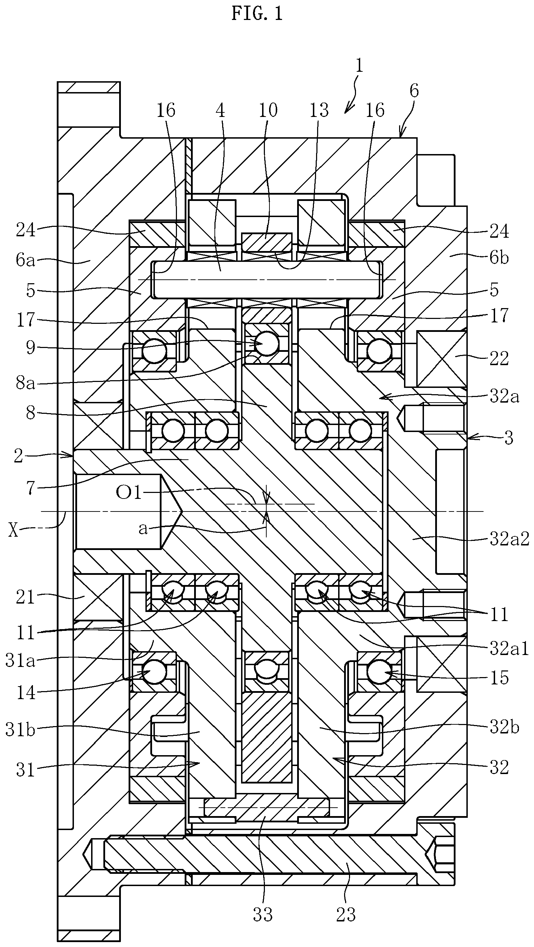

As shown in FIG. 1, the speed reducer 1 as a power transmission device according to one embodiment of the present invention includes an input rotating part 2, an output rotating part 3, a roller 4 as a rolling element, a fixed member 5, and a housing 6 that houses all of the above. In the illustrated example, the housing 6 is configured by a first housing member 6a provided on the input side (left in FIG. 1) and a second housing member 6b provided on the output side (right in FIG. 1). Both of the housing members 6a and 6b are fixed by appropriate means such as the bolts 23. The input rotating part 2 and the output rotating part 3 are disposed coaxially and have a common rotation center X. The fixed member 5 is fixed to the housing 6.

The input rotating part 2 has the input shaft 7, the eccentric cam 8, the rolling bearing 9, and the input member 10. The input shaft 7 is rotatable around the rotation center X with respect to the housing 6. In the present embodiment, the input shaft 7 is rotatably supported with respect to the housing 6 by a plurality of rolling bearings 11 mounted between the input shaft 7 and an inner peripheral surface of the output rotating part 3. In the illustrated example, two bearings 11 are respectively provided on both sides of the eccentric cam 8 in the axial direction. A seal member 21 is provided between an outer peripheral surface of the input shaft 7 and the inner peripheral surface of the first housing member 6a to prevent grease or oil filled in the housing 6 from leaking out. The eccentric cam 8 is provided on an outer periphery of the input shaft 7, and is provided integrally with the input shaft 7 in the illustrated example. The center line O1 of the cylindrical outer peripheral surface 8a of the eccentric cam 8 is eccentric in the radial direction by the eccentric amount "a" with respect to the rotation center X. The input member 10 has a substantially disk shape, and the center line of the input member 10 coincides with the center line O1 of the cylindrical outer peripheral surface 8a of the eccentric cam 8. The rolling bearing 9 is mounted between the cylindrical outer peripheral surface 8a of the eccentric cam 8 and the inner peripheral surface of the input member 10. As a result, the input member 10 is relatively rotatable with respect to the eccentric cam 8.

The fixed members 5 are provided on both sides of the input member 10 in the axial direction. The fixed members 5 have an annular shape, and in the illustrated example, both fixed members 5 include an identical material and have an identical shape. The fixed members 5 are fixed to the housing 6 by an appropriate means. In the illustrated example, a regulating member 24 that regulates a circumferential movement of each fixed member 5 with respect to the housing 6 is provided. The regulating member 24 is mounted on a key groove provided on the inner peripheral surface of each of the housing members 6a and 6b and the outer peripheral surface of each fixed member 5, and engages with the key groove in the circumferential direction to regulate the movement of each fixed member 5 with respect to the housing 6 in the circumferential direction.

The input member 10 and each fixed member 5 are disposed side by side in the axial direction at predetermined intervals. The input member 10 is provided with a plurality of first pockets 13 that penetrates the input member 10 in the axial direction. A rolling element engaging groove 16 is formed on a surface of each fixed member 5 on an inner side in the axial direction (a side facing the input member 10). That is, in the present embodiment, a first member having the first pockets 13 is provided in the input rotating part 2 as the input member 10, and the pair of second members each having the rolling element engaging groove 16 is the fixed members 5.

In this speed reducer 1, a roller 4 having a cylindrical outer peripheral surface is used as a rolling element that transmits torque. In the illustrated example, a cylindrical roller having a cylindrical outer peripheral surface is used as the roller 4. The roller 4 is inserted into each first pocket 13 of the input member 10, and both ends of the roller 4 in the axial direction engage with the rolling element engaging groove 16 of each fixed member 5. The roller 4 rolls in the rolling element engaging groove 16 while rotating around a center line of the roller 4.

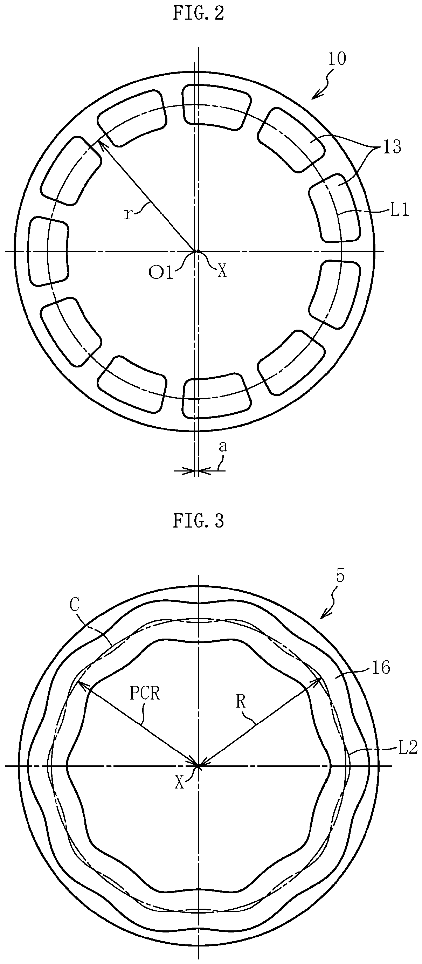

As shown in FIG. 2, the plurality of first pockets 13 provided in the input member 10 is disposed at equal intervals in a circumferential direction. A raceway center line L1 of the plurality of first pockets 13 is formed along a circle having a radius r centered on the center line O1. A curvature center of the raceway center line L1 of the first pockets 13 coincides with the cylindrical outer peripheral surface 8a of the eccentric cam 8 and the center line O1 of the input member 10. That is, the curvature center of the raceway center line L1 (that is, the center line O1) is eccentric with respect to the rotation center X of the input rotating part 2 by the eccentric amount "a". A radial width of each first pocket 13 is substantially equivalent to (slightly larger than) an outer diameter of the roller 4, and a circumferential length of each first pocket 13 is larger than the outer diameter of the roller 4. As a result, each roller 4 is held at a predetermined radial position in each first pocket 13 while being movable in the circumferential direction (direction along the raceway center line L1). In the illustrated example, the same number of first pockets 13 formed in the input member 10 as the rollers 4 are provided. However, the number of first pockets 13 is not limited thereto, and for example, may be smaller than the number of rollers 4, and a plurality of the rollers 4 may be inserted into one first pocket 13. The raceway center line L1 of the first pockets 13 refers to a track of the center line of the rollers 4 when the rollers 4 are moved in the first pockets 13.

As shown in FIG. 3, a raceway center line L2 of the rolling element engaging groove 16 formed in each fixed member 5 is formed in a corrugated curve alternately intersecting with a reference pitch circle C having a curvature center on the rotation center X at a constant pitch. That is, the rolling element engaging groove 16 is formed along a corrugated curve in which a distance R from the rotation center X fluctuates with respect to a reference pitch circle radius PCR. In the present embodiment, the corrugated curve configuring the raceway center line L2 is provided with ten peaks whose distance R from the rotation center X is larger than the reference pitch circle radius PCR, and ten valleys whose distance R from the rotation center X is smaller than the reference pitch circle radius PCR. The rolling element engaging grooves 16 formed in the fixed members 5 have the same shape and are disposed such that the peaks and valleys have the same phase. The raceway center line of the rolling element engaging groove 16 refers to the track of the center line of the rollers 4 when the rollers 4 are moved along the rolling element engaging groove 16.

The rolling element engaging groove 16 has a sectional shape in which each roller 4 is fitted, and has a rectangular cross section in the illustrated example (see FIG. 1). A groove width of the rolling element engaging groove 16 is substantially identical to (slightly larger than) the outer diameter of the rollers 4. An axial gap is formed between a bottom surface of the rolling element engaging groove 16 and an end surface of each roller 4. The axial end surface of each roller 4 being in contact with the bottom surface of any of the rolling element engaging grooves 16 restricts further axial movement of each roller 4.

As shown in FIG. 1, the output rotating part 3 has a first output member 31 provided on one side (left in the drawing) of the input member 10 in the axial direction, a second output member 32 provided on the other side (right in the drawing) of the input member 10 in the axial direction, and a connecting member 33 connecting the first output member 31 and the second output member 32. The first output member 31 has a cylindrical shaft part 31a and a disk part 31b extending from the shaft part 31a toward the outer diameter. The second output member 32 has a shaft part 32a that functions as an output shaft, and a disk part 32b that extends from the shaft part 32a toward the outer diameter. The shaft part 32a of the second output member 32 has a cylindrical part 32a1 and a lid 32a2 that closes an opening of the cylindrical part 32a1. The lid 32a2 is provided with a connecting part connecting other members to which the decelerated rotation is to be transmitted. In the illustrated example, the shaft part 31a and the disk part 31b of the first output member 31 are integrally molded, and the shaft part 32a and the disk part 32b of the second output member 32 are integrally molded.

The output rotating part 3 is rotatable around the rotation center X with respect to the housing 6. In the present embodiment, an outer diameter end of the disk part 31b of the first output member 31 and an outer diameter end of the disk part 32b of the second output member 32 are connected by the connecting member 33, whereby the output members 31 and 32 are integrally rotatable. Specifically, the output rotating part 3 is integrally rotatably supported with respect to the housing 6 by a rolling bearing 14 mounted between an outer peripheral surface of the shaft part 31a of the first output member 31 and an inner peripheral surface of each fixed member 5 on one side in the axial direction, and a rolling bearing 15 mounted between an outer peripheral surface of the shaft part 32a of the second output member 32 and an inner peripheral surface of each fixed member 5 on the other side in the axial direction. A seal member 22 is provided between an outer peripheral surface of the shaft part 32a of the second output member 32 and the inner peripheral surface of the second housing member 6b to prevent grease or oil filled in the housing 6 from leaking out.

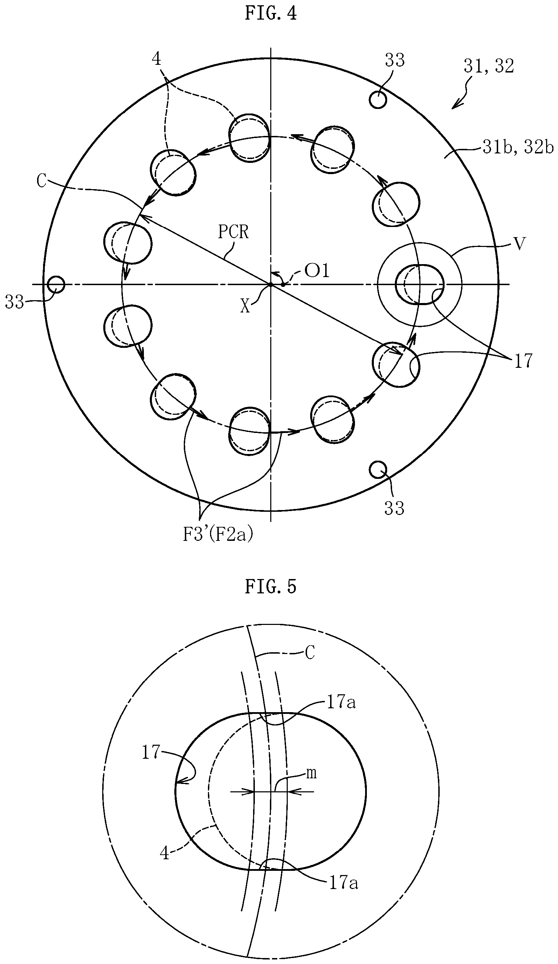

The disk part 31b of the first output member 31 and the disk part 32b of the second output member 32 are provided between the input member 10 and the fixed members 5 in the axial direction, respectively. The disk parts 31b and 32b of the output members 31 and 32 are provided with a plurality of second pockets 17 that penetrates the disc parts 31b and 32b in the axial direction. That is, in the present embodiment, a pair of third members having the second pockets 17 is provided in the output rotating part 3 as the output members 31 and 32. As shown in FIG. 4, the second pockets 17 are elongated holes extending radially around the rotation center X. The second pockets 17 are formed on the same circumference at equal intervals in the circumferential direction. The second pockets 17 provided on the output members 31 and 32 are provided at the same position (that is, the same radial position and phase) in a plane orthogonal to the axial direction. The number of second pockets 17 (that is, the number of rollers 4) formed in each of the output members 31 and 32 is eleven, which is one more than the number of peaks or valleys (ten) of the corrugated curve of the raceway center line L2.

As shown in FIG. 5, each roller 4 can move within each second pocket 17 within a range of a predetermined amount m in the radial direction with respect to the reference pitch circle C. In the present embodiment, a pair of parallel flat surfaces 17a facing each other in the circumferential direction is provided on a peripheral wall of each second pocket 17, and a circumferential distance between the flat surfaces 17a is substantially equal to (slightly larger than) an outer diameter of each roller 4. As a result, each roller 4 is held in a predetermined circumferential position in each second pocket 17 while being movable in the radial direction.

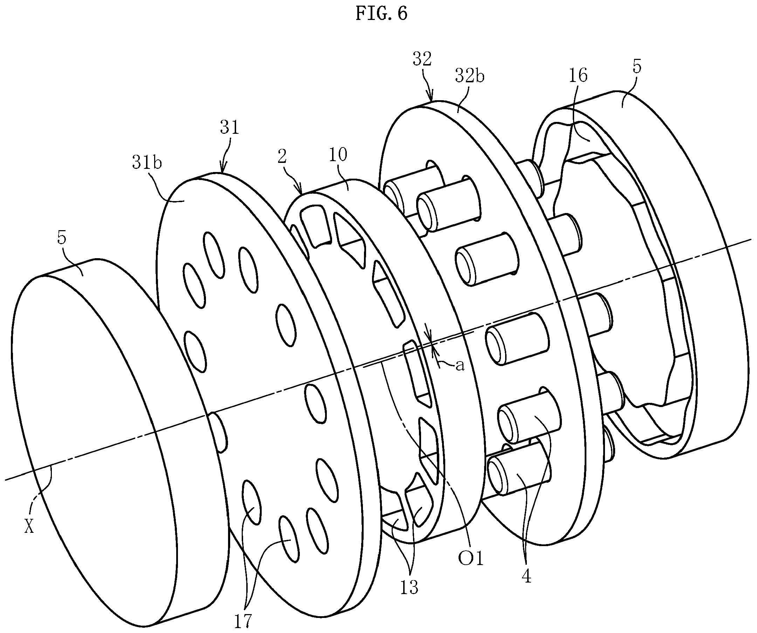

As shown in FIG. 6, the input member 10 of the input rotating part 2 and the output members 31 and 32 of the output rotating part 3 have the common rotation center X, and axial centers of both of the fixed members 5 are disposed on the rotation center X. The central axis O1 of the input member 10 (that is, the curvature center of the raceway center line L1 of the first pockets 13) is eccentric with respect to the rotation center X by the eccentric amount "a". The rollers 4 are inserted into the first pockets 13 of the input member 10 and the second pockets 17 of the output members 31 and 32 and protrude toward both sides in the axial direction, and the protruding parts (both ends in the axial direction) engage with the rolling element engaging grooves 16 of the fixed members 5 (see FIG. 1). Note that FIG. 6 schematically shows each member.

In the speed reducer 1 according to the present embodiment, the number of peaks of the raceway center line L2 of each rolling element engaging groove 16 is ten (the number of valleys is also ten), and the number of rollers 4 is eleven. Thus, a reduction ratio i obtained by the following equation is 1/11.

$$\text{Reduction ratio i} = (\text{number of rollers} - \text{number of peaks})/\text{number of rollers}$$

The number of peaks is the number of rollers $\pm$ 1. This means that when the reduction ratio i is a negative value, the rotation direction of the output rotating part 3 is opposite to the rotation direction of the input rotating part 2.

A shape of the raceway center line L2 of the rolling element engaging groove 16 is set such that a decelerated rotational motion is transmitted from the input rotating part 2 to the output rotating part 3 in synchronous rotation. Specifically, where the reduction ratio of the speed reducer 1 is i, a shape of the rolling element engaging groove 16 is set such that the rollers 4 engaging with the first pockets 13 engage with the rolling element engaging groove 16 with the input shaft 7 at a rotation angle $\theta$ and the output rotating part 3 at a rotation angle $i\theta$ to transmit torque. That is, the shape of the rolling element engaging groove 16 is set such that the distance R between the rotation center X of the input rotating part 2 and the output rotating part 3 and the raceway center line L2 of the rolling element engaging groove 16 satisfies the following equation (1).

$$R = a\cdot\cos(\varphi/i) + \sqrt{\{r2 - (a\cdot\sin(\varphi/i))2\}}\cdots(1)$$

where

R: distance between the rotation center X and the raceway center line L2 of the rolling element engaging groove 16
a: eccentric amount of the center O1 of the raceway center line L1 of the first pockets 13 with respect to the rotation center X
i: reduction ratio
$\varphi$: rotation angle of the output rotating part 3
r: radius of the raceway center line L1 of the first pockets 13.

Of the input member 10, both of the output members 31 and 32, and both fixed members 5, at least a peripheral wall of each first pocket 13, the peripheral wall of each second pocket 17, and a side wall of the rolling element engaging groove 16 that contact each roller 4 are preferably provided with surface hardness equivalent to the surface hardness of the surface of each roller 4 in order to reduce friction with the rollers 4 due to a difference in the surface hardness. For example, the surface hardness of the side wall of each first pocket 13, the peripheral wall of each second pocket 17, and the side wall of the rolling element engaging groove 16 is preferably within a range of HRC50 to HRC60. Specifically, the input member 10, the output members 31 and 32, and the fixed members 5 are formed by using carbon steel for machine structure such as S45C and S50C or alloy steel for machine structure such as SCM415 and SCM420, and then are subjected to a total heat treatment or a carburizing heat treatment to obtain the above surface hardness. Alternatively, the above surface hardness can also be obtained by forming each of the above members using a bearing steel such as SUJ2 and performing a total heat treatment or a high frequency heat treatment on the members.

Next, operations of the speed reducer 1 according to the present embodiment will be summarized and described. In response to a rotation of the input shaft 7 of the input rotating part 2 shown in FIG. 1, the input member 10 revolves around the rotation center X with a whirl radius "a". At that time, the input member 10, which is rotatable with respect to the eccentric cam 8 provided on the input shaft 7, hardly rotates. This reduces a relative friction amount between the first pockets 13 and the rollers 4 and improves the transmission efficiency of the rotational torque.

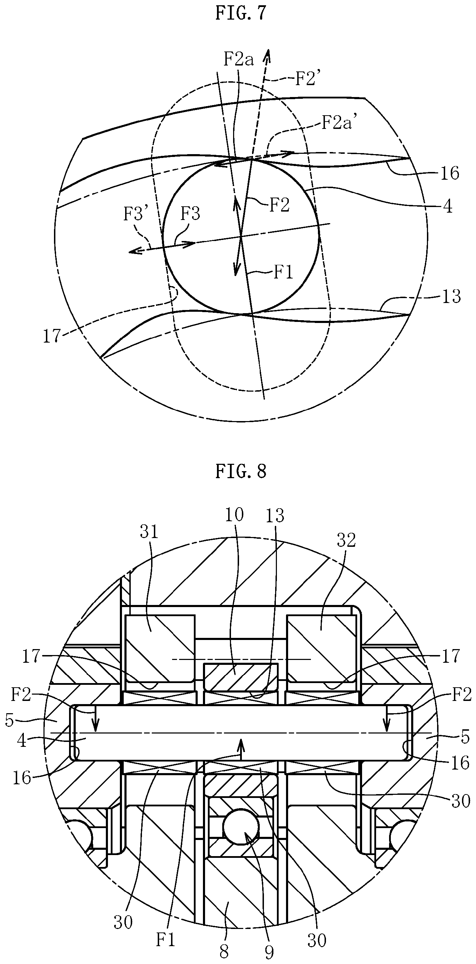

In response to the revolution of the input member 10, each roller 4 that engages with each circular first pocket 13 moves along the rolling element engaging groove 16 formed in each fixed member 5. Specifically, when the center line O1 of the input member 10 revolves in the direction of the arrow from the position shown in FIG. 4, each roller 4 engages with each first pocket 13 formed in the input member 10 as shown in FIG. 7, and a substantially upward contact force F1 acts on each roller 4. By the engagement of both ends of the balls 4 in the axial direction with the rolling element engaging groove 16, a contact force F2' with the rollers 4 acts on the rolling element engaging groove 16, and at the same time, a contact force F2 due to a contact with the rolling element engaging groove 16 acts on the rollers 4. A circumferential direction component F2a of the contact force F2 causes the rollers 4 to move in the circumferential direction along the rolling element engaging groove 16. The rollers 4 engage with the second pockets 17 of the output rotating part 3 in the circumferential direction, and a contact force F3' generated by this engagement acts as a force to rotate the output rotating part 3 in the same direction as the input shaft 7 (see FIG. 4).

The force to rotate the output rotating part 3 (that is, the contact force F3' acting on the second pockets 17 of the output members 31 and 32 from the rollers 4 $\approx$ the circumferential direction component F2a of the contact force F2 that the rollers 4 receive from the rolling element engaging groove 16) changes depending on a contact state between the rollers 4 and the rolling element engaging groove 16 having a corrugated shape, and therefore has a different magnitude depending on the position of each roller 4 (see FIG. 4). The rollers 4 are disposed around the rotation center X of the input rotating part 2 and the output rotating part 3. Thus, the force to rotate the output rotating part 3 is distributed around the rotation center X. Specifically, the rollers 4 located at both upper and lower ends in the drawing and contacting near a center between a top of each peak and a top of each valley of the rolling element engaging groove 16 having a corrugated shape (a part having a larger inclined angle with respect to the pitch circle centered on the rotation center X) have a larger force to rotate the output rotating part 3. The rollers 4 located at both left and right ends in the drawing and contacting near the top of each peak or the top of each valley of the rolling element engaging groove 16 having a corrugated shape (a part having a smaller inclined angle with respect to the pitch circle centered on the rotation center X) have a smaller force to rotate the output rotating part 3.

As described above, by using the rollers 4 as the rolling elements that transmit torque, as shown in FIG. 8, almost no load in the axial direction is generated between the rollers 4 and each member (the input member 10, the output members 31 and 32, and the fixed members 5). In particular, using cylindrical rollers as the rolling elements as in the present embodiment will make the load in the axial direction between the rollers 4 and each member zero. As a result, the load applied to the bearings 9 and 11 supporting the input member 10 and the bearings 14 and 15 supporting the output members 31 and 32 is only in the radial direction. Thus, compared to a case where a load is applied in both radial and axial directions, the bearings can be miniaturized, and consequently, the speed reducer 1 as a whole can be miniaturized. Further, by limiting the load applied to the above bearings in the radial direction, the torque loss inside these bearings is reduced, and thus the transmission efficiency of the rotational torque is improved.

Further, in the speed reducer 1, the pair of fixed members 5 and the pair of output members 31 and 32 are disposed symmetrically in the axial direction around the input member 10, the rollers 4 are inserted into the first pockets 13 of the input member 10 and the second pockets 17 of the output members 31 and 32, and both ends of each roller 4 in the axial direction engage with the rolling element engaging grooves 16 of both fixed members 5. During torque transmission, the contact force F1 with the first pockets 13 of the input member 10 acts on each center of the rollers 4 in the axial direction, and the contact force F3 with the second pockets 17 of the output members 31 and 32 (see FIG. 7) and the contact force F2 with the rolling element engaging grooves 16 of both fixed members 5 act on both sides of the rollers 4 in the axial direction. In this way, the contact forces F1, F2, and F3 with each member act on the rollers 4 symmetrically in the axial direction, and thus the moment applied to the rollers 4 are cancelled out, thereby preventing the rollers 4 from collapsing and smoothly transmitting the torque. In particular, in the present embodiment, by inserting the rollers 4 into the second pockets 17 of the pair of output members 31 and 32 integrated by the connecting member 33, two locations on each roller 4 in the axial direction are always held in the same circumferential position in each second pocket 17 disposed in the same phase, thereby reliably preventing the rollers 4 from collapsing in the circumferential direction.

In the speed reducer 1, when a friction reducing member such as a needle bearing or a slide bearing (for example, sintered oil-impregnated bearing) is provided at a contact part between the rollers 4 and at least one of three elements of the first pockets 13, the rolling element engaging groove 16, or the second pockets 17, a friction loss at these contact parts is significantly reduced, and the torque transmission efficiency is improved. In particular, when the friction reducing member is provided at the contact part between the rollers 4 and two of the above three components, the contact with the remaining one component becomes a rolling contact, thereby increasing the effect of the improvement of the torque transmission efficiency. In the present embodiment, as shown in FIG. 8, the friction reducing member 30 is formed in an axial region of the outer peripheral surface of each roller 4 in contact with each first pocket 13, and in an axial region of the outer peripheral surface of each roller 4 in contact with each second pocket 17. A place where the friction reducing member 30 is provided is not limited to the above, and the friction reducing member 30 may be provided at the contact parts between the rollers 4 and all of the above three components. Further, if the friction reducing member is not particularly required, the rollers 4 may be directly in contact with all of the three components.

In the speed reducer 1, the contact force F2' applied from each roller 4 to the rolling element engaging groove 16 is supported by each fixed member 5 fixed to the housing 6, and this eliminates the need for large bearings supporting the contact force F2'. Further, the rollers 4 engage with the second pockets 17 in the rotational direction while reciprocating in the radial direction, and thus only the contact force F3' in the rotational direction is applied from the rollers 4 to the output rotating part 3. In this way, limiting a direction of the contact force F3' to the rotation direction makes it possible to miniaturize the bearings 14 and 15 supporting the output rotating part 3, miniaturize the speed reducer 1, reduce the torque loss inside the bearings, and improve the torque transmission efficiency of the speed reducer 1.

As described above, during torque transmission, the contact force F3' in the circumferential direction due to contact with the rollers 4 is applied to the pillars provided between the second pockets 17 of the disk parts 31b and 32b of the output members 31 and 32 (see FIG. 7). Therefore, there is a concern that the pillars provided between the second pockets 17 of the disk parts 31b and 32b may be damaged by the contact force F3' received from the rollers 4. In particular, if the number of second pockets 17 (that is, the number of rollers 4) is increased in order to increase the reduction ratio, a circumferential width of each pillar between the second pockets 17 becomes narrower, and thus there is more concern that the pillars may be damaged by the contact force F3' due to the contact with the rollers 4.

In this regard, in the present embodiment, as shown in FIG. 4, the contact force F3' with the second pockets 17 acts not only on the rollers 4 above the rotation center X but also on the rollers 4 below the rotation center X and contributes to the torque transmission. Therefore, as compared with a case where torque is transmitted only by the rollers 4 above the rotation center X, for example, the contact force F3' applied from each roller 4 to the disk parts 31b and 32b is dispersed, and thus a load applied to each pillar of the disk parts 31b and 32b is reduced. In particular, in the present embodiment, by providing the pair of output members 31 and 32 on both sides of the input member 10, contact points between the rollers 4 and the output members 31 and 32 increase, thereby further reducing the load at each of the contact points. Furthermore, in the present embodiment, as described above, the surface hardness of the peripheral wall of each second pocket 17 is increased to HRC50 or more by selection of the material of the disk parts 31b and 32b and the heat treatment. This can enhance the durability of the pillars between the second pockets 17 of the output members 31 and 32, or enhance the load capacity while maintaining the durability of the pillars.

In this way, the rotation input to the input shaft 7 of the input rotating part 2 is transmitted to the output rotating part 3 via the rollers 4. At that time, when the raceway center line L2 of the rolling element engaging groove 16 is designed such that the distance R between the rotation center X of the input rotating part 2 and the output rotating part 3 and the raceway center line L2 of the rolling element engaging groove 16 satisfies the above equation (1), the output rotating part 3 always rotates synchronously about the input shaft 7 at a reduced rotation speed.

The embodiment of the present invention is not limited to the above. Hereinafter, other embodiments of the present invention will be described, but points similar to those of the above embodiments will not be repeated.

In the above embodiment, the input member 10 is rotatable with respect to the input shaft 7, but the input member 10 and the input shaft 7 may be integrally rotated. In the above embodiment, the configuration is illustrated in which the input shaft 7 and the eccentric cam part 8 are integrally formed. However, the present invention is not limited thereto. The input shaft 7 and the eccentric cam 8 may be formed separately, and the eccentric cam part 8 may be fixed to the outer peripheral surface of the input shaft 7.

In the above embodiment, the shaft part 31a and the disk part 31b of the first output member 31 are integrally formed, and the shaft part 32a and the disk part 32b of the second output member 32 are integrally formed. However, these members may be separately formed. By forming the first output member 31 and the second output member 32 with an identical material and in an identical shape, the manufacturing cost can be reduced.

In the above embodiment, the case is shown where the first output member 31 and the second output member 32 are connected by the connecting member 33. However, the present invention is not limited thereto. For example, the output members 31 and 32 may be integrally formed, or may be integrated by welding. The output members 31 and 32 do not have to be connected, and may be independently rotatable.

In the above embodiment, the case is illustrated where the present invention is applied to the speed reducer 1 having the reduction ratio i of 1/11. However, the present invention is not limited thereto, and suitably applicable to, for example, a speed reducer having any reduction ratio within a range of 1/5 to 1/50. In this case, it is sufficient that the number of peaks/valleys of the corrugated curve of the raceway center line of the rolling element engaging groove and the number of pockets and rollers of the fixed member are appropriately set in accordance with the reduction ratio i.

Further, in the above embodiment, a case is shown where the first member having the first pockets 13 is the input member 10, the second members having the rolling element engaging grooves 16 having a corrugated shape is the fixed members 5, and the third members having the second pockets 17 are the output members 31 and 32. However, the present invention is not limited thereto. By appropriately assigning the first member, the second members, and the third members to the input rotating part, the fixed members, and the output rotating part depending on specifications required by a user, usage environment, or the like, a power transmission form can be changed as needed.

REFERENCE SIGNS LIST

| | |
|---|---|
| 1 | Speed reducer (power transmission device) |
| 2 | Input rotating part |
| 3 | Output rotating part |
| 4 | Roller |
| 5 | Fixed member (second member) |
| 6 | Housing |
| 7 | Input shaft |
| 8 | Eccentric cam |
| 10 | Input member (first member) |
| 13 | First pocket |
| 16 | Rolling element engaging groove |
| 17 | Second pocket |
| 30 | Friction reducing member |
| 31,32 | Output member (third member) |
| 33 | Connecting member |
| F1, F1' | Contact force between roller and first rolling element engaging groove |
| F2, F2' | Contact force between roller and second rolling element engaging groove |
| F3, F3' | Contact force between roller and pocket |
| L1 | Raceway center line of first rolling element engaging groove |
| L2 | Raceway center line of second rolling element engaging groove |
| O1 | Curvature center of raceway center line of first rolling element engaging groove (center line of input member) |
| X | Rotation center of input rotating part and output rotating part |

**Claims**

1. A power transmission device, comprising:

   an input rotating part (2);
   an output rotating part (3) disposed coaxially with the input rotating part (2);
   a plurality of rollers (4);
   a first member (10) having a plurality of first pockets (13) into which the plurality of rollers (4) is inserted;
   a pair of second members (5) provided on both sides of the first member (10) in an axial direction and each having a rolling element engaging groove (16) engaging with the plurality of rollers (4); and
   a pair of third members (31, 32) provided between the first member (10) and the pair of second members (5) in the axial direction and having a plurality of second pockets (17) into which the plurality of rollers (4) is inserted,
   wherein a rotation input to the input rotating part (2) is transmitted to the output rotating part (3) at a predetermined gear ratio,
   any of the first member (10), the pair of second members (5), or the pair of third members (31, 32) is provided in the input rotating part (2), and
   another of the first member (10), the pair of second members (5), or the pair of third members (31, 32) is provided in the output rotating part (3),
   **characterized in that**
   the plurality of first pockets (13) is disposed along a circle having a curvature center eccentric from a rotation center of the input rotating part (2) and the output rotating part (3), and
   the rolling element engaging groove (16) is disposed along a corrugated curve alternately intersecting a pitch circle having a curvature center on the rotation center (X).

2. The power transmission device according to claim 1, wherein the first member (10) is provided in the input rotating part (2), the pair of third members (31, 32) is provided in the output rotating part (3), and the pair of second members (5) is fixed members.

**3.** The power transmission device according to claim 2, wherein the pair of third members (31, 32) is integrally rotatable.

**4.** The power transmission device according to any one of claims 1 to 3, further comprising a friction reducing member (30) provided at a contact part between an outer peripheral surface of each of the plurality of rollers (4) and at least one of three components of the plurality of first pockets (13) of the first member (10), the plurality of second pockets (17) of the pair of third members (31, 32), or the rolling element engaging groove (16) of each of the pair of the second members (5).

**Patentansprüche**

**1.** Leistungsübertragungsvorrichtung, umfassend:

einen Eingangsdrehteil (2);
einen Ausgangsdrehteil (3), der koaxial zu dem Eingangsdrehteil (2) angeordnet ist;
eine Vielzahl von Rollen (4);
ein erstes Element (10), das eine Vielzahl von ersten Taschen (13) aufweist, in welcher die Vielzahl der Rollen (4) eingesetzt ist;
ein Paar zweiter Elemente (5), die auf beiden Seiten des ersten Elements (10) in einer axialen Richtung bereitgestellt sind und jeweils eine Wälzkörper-Eingriffsnut (16) aufweisen, die sich im Eingriff mit der Vielzahl der Rollen (4) befindet; und
ein Paar dritter Elemente (31, 32), die zwischen dem ersten Element (10) und dem Paar der zweiten Elemente (5) in der axialen Richtung bereitgestellt sind und eine Vielzahl zweiter Taschen (17) aufweisen, in welchen die Vielzahl der Rollen (4) eingesetzt ist,
wobei eine Drehung, die in den Eingangsdrehteil (2) eingegeben wird, mit einem vorgegebenen Übersetzungsverhältnis an den Ausgangsdrehteil (3) übertragen wird,
ein beliebiges von dem ersten Element (10), dem Paar der zweiten Elemente (5) oder dem Paar der dritten Elemente (31, 32) in dem Ausgangsdrehteil (3) bereitgestellt ist,
**dadurch gekennzeichnet, dass**
die Vielzahl der ersten Taschen (13) entlang eines Kreises angeordnet ist, der einen Krümmungsmittelpunkt aufweist, der bezüglich eines Drehmittelpunkts des Eingangsdrehteils (2) und des Ausgangsdrehteils (3) exzentrisch ist, und
die Wälzkörper-Eingriffsnut (16) entlang einer gewellten Kurve angeordnet ist, die alternierend einen Wälzkreis schneidet, der einen Krümmungsmittelpunkt auf dem Drehmittelpunkt (X) aufweist.

**2.** Die Leistungsübertragungsvorrichtung nach Anspruch 1, wobei das erste Element (10) in dem Eingangsdrehteil (2) bereitgestellt ist, das Paar der dritten Elemente (31, 33) in dem Ausgangsdrehteil (3) bereitgestellt ist und das Paar der zweiten Elemente (5) feststehende Elemente sind.

**3.** Die Leistungsübertragungsvorrichtung nach Anspruch 2, wobei das Paar der dritten Elemente (31, 32) einstückig drehbar ist.

**4.** Die Leistungsübertragungsvorrichtung nach einem der Ansprüche 1 bis 3, ferner umfassend ein Reibungsverringerungselement (30), das an einem Kontaktteil zwischen einer Außenumfangsfläche von jeder der Vielzahl der Rollen (4) und mindestens einer von drei Komponenten der Vielzahl der ersten Taschen (13) des ersten Elements (10), der Vielzahl der zweiten Taschen (17) des Paares der dritten Elemente (31, 32) oder der Wälzkörper-Eingriffsnut (16) von jedem des Paares der zweiten Elemente (5) bereitgestellt ist.

**Revendications**

**1.** Dispositif de transmission de puissance, comprenant :

une partie rotative d'entrée (2) ;
une partie rotative de sortie (3) disposée coaxialement à la partie rotative d'entrée (2) ;
une pluralité de rouleaux (4) ;
un premier élément (10) ayant une pluralité de premiers logements (13) dans lesquels sont insérés les rouleaux de la pluralité de rouleaux (4) ;

une paire de deuxièmes éléments (5) pourvus sur les deux côtés du premier élément (10) dans une direction axiale et ayant chacun une rainure d'engagement d'éléments roulants (16) qui s'engage avec la pluralité de rouleaux (4) ; et

une paire de troisièmes éléments (31, 32) pourvus entre le premier élément (10) et la paire de deuxièmes éléments (5) dans la direction axiale et ayant une pluralité de deuxièmes logements (17) dans lesquels sont insérés les rouleaux de la pluralité de rouleaux (4),

dans lequel une entrée de rotation sur la partie rotative d'entrée (2) est transmise à la partie rotative de sortie (3) selon un rapport de transmission prédéterminé,

l'un quelconque parmi le premier élément (10), la paire de deuxièmes éléments (5) et la paire de troisièmes éléments (31, 32) est pourvu dans la partie rotative d'entrée (2), et

un autre parmi le premier élément (10), la paire de deuxièmes éléments (5) et la paire de troisièmes éléments (31, 32) est pourvu dans la partie rotative de sortie (3),

**caractérisé en ce que**

la pluralité de premiers logements (13) est disposée le long d'un cercle ayant un centre de courbure excentré par rapport au centre de rotation de la partie rotative d'entrée (2) et de la partie rotative de sortie (3), et

la rainure d'engagement d'éléments roulants (16) est disposée le long d'une courbe ondulée entrecoupant alternativement un cercle primitif ayant un centre de courbure sur le centre de rotation (X).

2. Dispositif de transmission de puissance selon la revendication 1, dans lequel le premier élément (10) est pourvu dans la partie rotative d'entrée (2), la paire de troisièmes éléments (31, 32) est pourvue dans la partie rotative de sortie (3), et la paire de deuxièmes éléments (5) est constituée d'éléments fixes.

3. Dispositif de transmission de puissance selon la revendication 2, dans lequel la paire de troisièmes éléments (31, 32) est intégralement rotative.

4. Dispositif de transmission de puissance selon l'une quelconque des revendications 1 à 3, comprenant en outre un élément de réduction de frottement (30) pourvu sur une partie de contact entre une surface périphérique externe de chaque rouleau de la pluralité de rouleaux (4) et au moins l'un parmi les trois composants de la pluralité de premiers logements (13) du premier élément (10), la pluralité de deuxièmes logements (17) de la paire de troisièmes éléments (31, 32), et la rainure d'engagement d'éléments roulants (16) de chaque élément de la paire des deuxièmes éléments (5) .

## FIG. 1

## FIG. 2

## FIG. 3

FIG. 4

FIG. 5

FIG. 6

FIG. 7

FIG. 8

FIG. 9

FIG. 10

FIG. 11

**EP 3 859 189 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018021602 A

- JP 2005330990 A